Europäisches Patentamt

European Patent Office

Office européen des brevets

(19)

(11) Veröffentlichungsnummer: **0 247 025 B1**

(12) **EUROPÄISCHE PATENTSCHRIFT**

(45) Veröffentlichungstag der Patentschrift: **05.08.92**

(21) Anmeldenummer: **87890099.2**

(22) Anmeldetag: **14.05.87**

Die Akte enthält technische Angaben, die nach dem Eingang der Anmeldung eingereicht wurden und die nicht in dieser Patentschrift enthalten sind.

(51) Int. Cl.⁵: **B07B 1/44**

(30) Priorität: **15.05.86 AT 1303/86**

(43) Veröffentlichungstag der Anmeldung:
**25.11.87 Patentblatt 87/48**

(45) Bekanntmachung des Hinweises auf die Patenterteilung:
**05.08.92 Patentblatt 92/32**

(84) Benannte Vertragsstaaten:
**CH DE ES FR GR IT LI SE**

(56) Entgegenhaltungen:
**DE-C- 869 591**
**GB-A- 642 844**
**NL-C- 43 923**
**US-A- 1 577 310**

(54) Massenausgleich für Schwingantriebe.

(73) Patentinhaber: **MASCHINENFABRIK HEID AKTIENGESELLSCHAFT**
**Ernstbrunner Strasse 31-33**
**A-2000 Stockerau(AT)**

(72) Erfinder: **Seidl, Johann**
**Hanftal 40**
**A-2136 Laa an der Thaya(AT)**

(74) Vertreter: **Müllner, Erwin, Dr. et al**
**Patentanwälte Dr. Erwin Müllner Dipl.-Ing.**
**Werner Katschinka Postfach 159 Weihburggasse 9**
**A-1010 Wien(AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung bezieht sich auf einen Massenausgleich für Schwingantriebe, vorzugsweise in Gewichtsauslesern, Trockensteinauslesern oder Flachsiebmaschinen, die im wesentlichen aus einem auf in einem Grundrahmen drehbar gelagerten Lenkern bewegbaren Schwingrahmen, einem eine Kurbel- oder Exzenterwelle antreibenden Motor und mindestens einer Kurbelwelle und Schwingrahmen verbindenden Pleuelstange bzw. mindestens einer auf einem Fortsatz des Schwingrahmens abrollenden, auf der Exzenterwelle angeordneten Rolle bestehen. Ein Gewichtsausleser der angegebenen Art ist jener mit der Typenbezeichnung GA 120 der Patentinhaberin.

Die bisher bekannten Kurbel- und Exzenterantriebe, wie sie in den verschiedensten Maschinen angeordnet sind, beanspruchen den Grundrahmen der Maschinen und das Fundament, auf dem die Maschinen angeordnet sind mit Reaktionskräften, die aus den Massen der bewegten Teile multipliziert mit deren maximalen Beschleunigung resultieren. Ihr einfacher Aufbau und die Exaktheit der durch sie bewirkten Schwingbewegungen sowohl hinsichtlich Schwingrichtung als auch hinsichtlich Amplitude rechtfertigen ihren Einsatz, obwohl ihre Leistungsfähigkeit durch die Belastung der Umgebung (Maschinenteile und Fundament) im Vergleich mit der Belastbarkeit der Kurbeltriebwerkbauteile selbst stark eingeschränkt ist.

Dieser Umstand wirkt sich bei Maschinen mit Schwingantrieb, bei denen die räumliche Lage der in Schwingung versetzten Maschinenteile während des Betriebes verändert werden muß, beispielsweise bei erforderlichen Einstellvorgängen bei Siebmaschinen u.dgl. besonders nachteilig aus. Bei den bisher bekannten Maschinen mit Schwingantrieben können daher Verstellvorgänge teilweise nur bei Stillstand ausgeführt werden. Der Aufwand für die Konstruktion zur Arretierung der in Schwingung befindlichen Maschinenteile im Maschinengestell und zur sicheren Einleitung der unausgeglichenen Massenkräfte in das Fundament ist erheblich.

Das Beherrschen der unausgeglichenen Kräfte ist auch bei mobilen Schwingmaschinen problematisch. Hohes Eigengewicht der Maschinen und deren Stabile Abstützung sind unerläßlich.

Leistungsfähige Schwingantrieb in Verbindung mit Leichtbauweise sind eine Forderung, die an den unausgeglichenen Massenkräften scheiterte.

Ziel der Erfindung ist, hier Abhilfe zu schaffen und einen Schwingantrieb bereitzustellen, bei dem die oben angegebenen Schwierigkeiten beseitigt sind.

Dieses Ziel wird mit einem Massenausgleich für Schwingantriebe der eingangs angeführten Art erreicht, bei dem erfindungsgemäß die Lenker an einem Ende des Schwingrahmens über ihre Anlenkstelle im Grundrahmen hinaus verlängert sind, und an den Enden der verlängerten Lenker die Kurbel- oder Exzenterwelle gelagert ist, und zwar in Seitenansicht etwa im Schnittpunkt der Verlängerung der Mittellinie der Mittellage der Lenker und der Normalen dazu durch den Schwerpunkt des Schwingrahmens, wobei das Produkt aus Masse des Schwingrahmens und dem Abstand zwischen Anlenkstelle der Lenker an dem Schwingrahmen und der Anlenkstelle der Lenker im Grundrahmen etwa gleich ist dem Produkt aus Masse der Kurbel- oder Exzenterwelle und gegebenenfalls darauf angeordneten Ausgleichsgewichten und dem Abstand zwischen Anlenkstelle der Lenker im Grundrahmen und der Mittellinie der in den Lenker gelagerten Welle.

Der erfindungsgemäße Massenausgleich für Schwingantriebe hat den Vorteil, daß die damit ausgerüsteten Maschinen im wesentlichen aus den gleichen Bauteilen bestehen wie die entsprechenden Maschinen ohne Massenausgleich. Sie zeichnen sich daher durch hohe Wirtschaftlichkeit und wenig Raumbedarf aus.

Massenausgleich wird z.B. erreicht, wenn sich zwei Massen gleichen Betrages in entgegengesetzter Richtung mit gleicher Geschwindigkeit bewegen und ihre Schwerpunkte auf einer Wirkungslinie liegen, sodaß der Gesamtschwerpunkt des Systems in Ruhelage bleibt. Erfindungsgemäß wird daher ein konventioneller Schwingungsantrieb in ein 2-Massensystem umgewandelt, indem die Lagerung der Kurbel- oder Exzenterwelle anstatt im Grundrahmen am Ende der Verlängerung der Lenker über ihren Drehpunkt im Grundrahmen hinaus angeordnet wird und die gesamte Antriebsanordnung solange verschoben wird, bis die Verbindungslinie der Schwerpunkte des Schwingrahmens und der Kurbel- oder Exzenterwelle lotrecht zur Lenkerebene steht.

Gemäß einem weiteren Merkmal der Erfindung erfolgt die Kraftübertragung des Motors auf die Kurbel- oder Exzenterwelle über einen Riemenantrieb, wobei die Mittellinie der parallel zur Kurbel- oder Exzenterwelle verlaufende Motorwelle die Mittellinie der Mittellage der Lenker schneidet. Durch diese Anordnung eines Riemenantriebes bleibt der Achsabstand von Motorachse zur Kurbel- oder Exzenterwellenachse annähernd konstant.

Um eine beliebige Position des Antriebsmotors zu ermöglichen, weist nach einem weiteren Merkmal der Erfindung die auf der Kurbel-oder Exzenterwelle angeordnete Riemenscheibe für den Riemenantrieb eine exzentrische Nabe auf, wobei die Exzentrizität der Riemenscheibe gleich ist der halben Schwenkamplitude der Kurbel- oder Exzenterwelle mal Sinus des Winkels der von der Mittellinie der Mittellage der Lenker und der Verbindungslinie von Motorwellenachse und Kurbel- oder Exzenterwellenachse eingeschlossen wird.

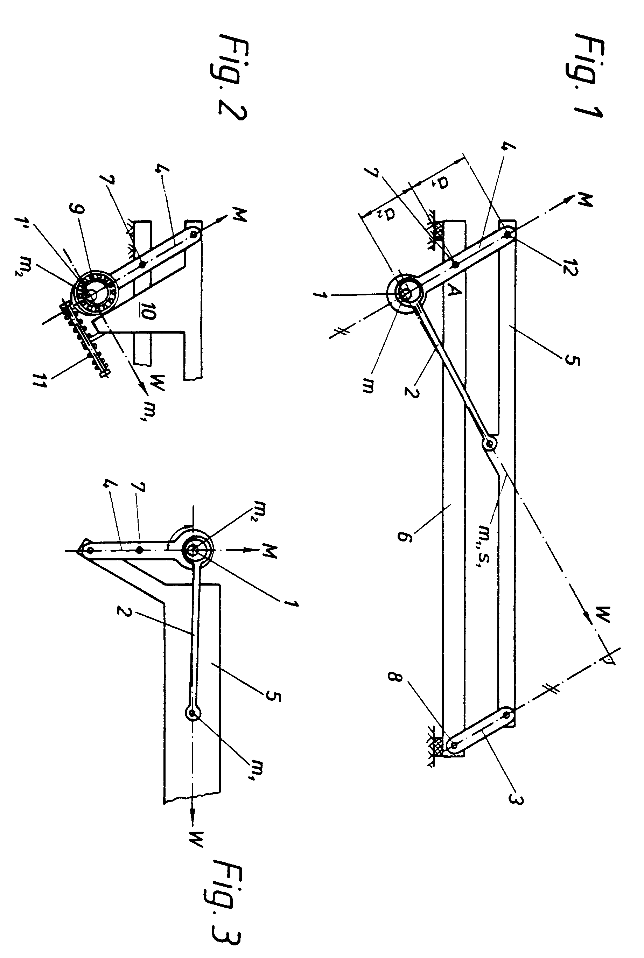

Die Erfindung wird im folgenden anhand der Zeichnung erläutert, wobei in den Fig. 1-3 drei Ausführungsformen des erfindungsgemäßen Massenausgleichs schematisch in Seitenansicht gezeigt sind.

Gemäß Fig. 1 ist ein Schwingrahmen 5 gelenkig in Lenkern 3, 4 gelagert, die mit dem Grundrahmen 6 an den Anlenkstellen 7, 8 verbunden sind. Die Lenker 4 sind über die Anlenkstelle 7 hinaus verlängert und an den Enden der verlängerten Lenker 4 ist die Kurbelwelle 1 gelagert. Die Kurbelwelle 1 ist durch Pleuelstangen 2 mit dem Schwingrahmen 5 verbunden. In der in Fig. 1 dargestellten Ausführungsform hat die Ausgleichsmasse $m_2$ denselben Betrag wie die bewegten Massen $m_1$ des Schwingramens und wird durch die Kurbelwelle 1 verkörpert. Sie könnte auch fest an den Lenkern befestigt sein. In jedem Fall liegt der Schwerpunkt der Ausgleichsmasse $m_2$ im Zentrum, d.h. auf der Drehachse der Kurbelwelle 1.

Die drei Drehpunkte in den Lenkern 4 liegen auf einer Geraden und sind symmetrisch verteilt, sodaß in der Lagerung an der Anlenkstelle 7 auf dem Grundrahmen ein Schwingungsknoten entsteht. Die Lenker erfüllen Steuerungsfunktionen und nehmen hauptsächlich die Gewichtskräfte der beiden Massen auf. Im übrigen gelten die gleichen Grundlagen wie für jeden kinematisch richtig angeordneten Kurbeltrieb (Schwingrichtung lotrecht zu Lenkerstellung - Krafteinleitung in das System in Schwingrichtung und Wirkungslinie der Kraft durch den Schwerpunkt der zu bewegenden Masse).

Bei der Ausführungsform gemäß Fig. 2 ist auf einer Exzenterwelle 1′ eine Rolle 9 gelagert, die auf einen Fortsatz 10 des Schwingrahmens 5 einwirkt. Die Exzenterwelle 1′ ist auch bei dieser Ausführungsform an den Enden der verlängerten Lenker 4 gelagert, die ihrerseits mit dem Grundrahmen 6 an den Anlenkstellen 7 verbunden sind, und in denen der Schwingrahmen 5 gelagert ist. Es ist auch möglich, daß anstatt der Anordnung der Rolle 9 auf der Exzenterwelle auf dieser eine Rolle abrollt, die auf dem Fortsatz des Siebrahmens vorgesehen ist. Bei der Ausführungsform nach Fig. 2 ist es erforderlich, daß eine Rückstellkraft (z.B. eine Feder 11), die mindestens der größten Massenkraft entspricht, vorgesehen wird.

Bei der Ausführungsform gemäß Fig. 3 mit Wurfwinkel 0° ist am Schwingrahmen 5 eine Kröpfung vorgesehen, damit die Steuerfunktion der Lenker gewährleistet ist. Die die Mittellinie der Lenker 4 umfassende Ebene steht normal zur Schwingrichtung W. Auch bei dieser Ausführungsform ist der Schwingrahmen 5 in Lenkern 4 gelagert. Die Lenker sind mit dem Grundrahmen an den Anlenkstellen 7 verbunden und bilden an ihrem einen Ende die Lagerung für die Kurbelwelle 1. Diese ist mit dem Schwingrahmen 5 durch die Pleuelstange 2 verbunden.

Der Antrieb des Kurbel- oder Exzentermechanismus erfolgt wegen der geringen Masse und aus Kostengründen zweckmäßigerweise über einen Riemenantrieb.

Die Anordnung des Antriebsmotors ist hiebei durch die Schwingrichtung der Kurbelwelle insofern eingeschränkt, als der Achsabstand von Motorachse zu Kurbel- oder Exzenterwellenachse annähernd konstant bleiben soll. Der Drehpunkt der treibenden Riemenscheibe muß in der Verlängerung der Mittellinie der Lenker in Mittellage liegen.

Ist eine andere beliebige Position des Antriebsmotors erforderlich, muß die getriebene Riemenscheibe mit exzentrisch gebohrter Nabe ausgeführt werden, was bewirkt, daß Scheibenzentrum und Wellenzentrum in gekreuzter Richtung schwingen. Der Winkel, den die beiden Bahnen einschließen, ist beliebig wählbar und wird durch das Maß der Exzentrizität der Riemenscheibe bestimmt.

**Patentansprüche**

1. Massenausgleich für Schwingantriebe, vorzugsweise in Gewichtsauslesern, Trockensteinauslesern oder Flachsiebmaschinen, die im wesentlichen aus einem auf in einem Grundrahmen drehbar gelagerten Lenkern bewegbaren Schwingrahmen, einem eine Kurbel- oder Exzenterwelle antreibenden Motor und mindestens einer Kurbelwelle und Schwingrahmen verbindenden Pleuelstange bzw. mindestens einer auf einem Fortsatz des Schwingrahmens abrollenden auf der Exzenterwelle angeordneten Rolle bestehen, dadurch gekennzeichnet, daß die Lenker (4) an einem Ende des Schwingrahmens (5) über ihre Anlenkstelle (7) im Grundrahmen (6) hinaus verlängert sind, und an den Enden der verlängerten Lenker (4) die Kurbel- oder Exzenterwelle (1 bzw. 1′) gelagert ist und zwar in Seitenansicht etwa im Schnittpunkt der Verlängerung der Mittellinie (M) der Mittellage der Lenker (4) und der Normalen (W) dazu durch den Schwerpunkt ($s_1$) des Schwingrahmens (5), wobei das Produkt aus Masse ($m_1$) des Schwingrahmens (5) und dem Abstand ($a_1$) zwischen Anlenkstelle (12) der Lenker (4) an dem Schwingrahmen (5) und der Anlenkstelle (7) der Lenker (4) im Grundrahmen (6) etwa gleich ist dem Produkt aus Masse ($m_2$) der Kurbel- oder Exzenterwelle (1 bzw. 1′) und gegebenenfalls darauf angeordneten Ausgleichsgewichten und dem Abstand ($a_2$) zwischen Anlenkstelle (7) der Lenker (4) im Grundrahmen (6) und der Mittellinie der in den Lenkern (4) gelagerten Welle (1 bzw. 1′).

**2.** Massenausgleich für Schwingrahmen nach Anspruch 1, dadurch gekennzeichnet, daß die Kraftübertragung des Motors auf die Kurbel- oder Exzenterwelle (1, 1') über einen Riemenantrieb erfolgt, wobei die Mittellinie der parallel zur Kurbel- oder Exzenterwelle verlaufende Motorwelle die Mittellinie (M) der Mittellage der Lenker (4) schneidet.

**3.** Massenausgleich für Schwingantriebe nach Anspruch 2, dadurch gekennzeichnet, daß die auf der Kurbel -oder Exzenterwelle (1, 1') angeordnete Riemenscheibe für den Riemenantrieb eine exzentrische Nabe (17) aufweist, wobei die Exzentrizität der Riemenscheibe gleich ist der halben Schwenkamplitude der Kurbel- oder Exzenterwelle mal Sinus der Winkels der von der Mittellinie (M) der Mittellage der Lenker (4) und der Verbindungslinie von Motorwellenachse und Kurbel- oder Exzenterwellenachse eingeschlossen wird.

## Claims

**1.** Mass balance for swing drives, preferably in weight sorters, dry stone sorters or flat screening machines, consisting essentially of a swing frame moving on guide rods pivoted on a base frame, a motor driving a crankshaft or eccentric shaft and at least one connecting rod connecting the crankshaft and swing frame or at least one roller arranged on the eccentric shaft and rolling along an extension of the swing frame,
**characterized** in that the guide rods (4) are extended at one end of the swing frame (5) beyond their fulcrum (7) in the base frame (6), and the crankshaft or eccentric shaft (1 or 1') is arranged at the ends of the extended guide rods (4), approximately at the point where the extended center line (M) of the center position of the guide rods (4) intersects with its normal (W) through the center of gravity ($s_1$) of the swing frame (5), when viewed laterally, whereby the product of the mass ($m_1$) of the swing frame (5) by the distance ($a_1$) between the fulcrum (12) of the guide rods (4) in the swing frame (5) and the fulcrum (7) of the guide rods (4) in the base frame is approximately equal to the product of the mass ($m_2$) of the crankshaft or eccentric shaft (1 or 1'), plus any balancing weights which may be arranged on it, by the distance ($a_2$) between the fulcrum (7) of the guide rods (4) in the base frame (6) and the center line of the shaft (1 or 1') pivoted on the guide rods (4).

**2.** Mass balance for swing frames according to Claim 1,
**characterized** in that power transmission from the motor to the crankshaft or eccentric shaft (1, 1') is via a belt drive, whereby the center line of the motor shaft arranged in parallel to the crankshaft or eccentric shaft intersects with the center line (M) of the center position of the guide rods (4).

**3.** Mass balance for swing drives according to Claim 2,
**characterized** in that the belt drive pulley arranged on the crankshaft or eccentric shaft (1, 1') is provided with an eccentric hub (17), whereby the pulley's eccentricity equals half the swinging amplitude of the crankshaft or eccentric shaft multiplied with the sine of the angle enclosed by the center line (M) of the center position of guide rods (4) and the connecting line between motor shaft axis and crankshaft or eccentric shaft axis.

## Revendications

**1.** Equilibrage des masses pour commandes à mouvement oscillatoire, de préférence pour installations de triage pondéral, installations de triage de pierres à sec ou machines à tamis plat, sensiblement constituées d'un cadre oscillant mobile sur des bielles pivotantes dans un cadre de base, d'un moteur actionnant un vilebrequin ou arbre d'excentrique et d' au moins une bielle reliant le vilebrequin et le cadre oscillant, resp. d' au moins un galet disposé sur l'arbre d'excentrique et roulant sur un prolongement du cadre oscillant, caractérisé en ce que les bielles (4) situées à une extrémité du cadre oscillant (5) sont prolongées au-delà de leur point d'articulation (7) sur le cadre de base (6) et que le vilebrequin ou arbre d' excentrique (1 resp. 1') sont logés aux extrémités des bielles prolongées (4), et plus précisément vus de côté approximativement au point d'intersection du prolongement de l'axe (M) de la position moyenne des bielles (4) et leur perpendiculaire (W), passant par le centre de gravité ($s_1$) du cadre oscillant (5), le produit de la masse ($m_1$) du cadre oscillant (5) et de la distance ($a_1$) entre le point d'articulation (12) des bielles (4) sur le cadre oscillant (5) et le point d'articulation (7) des bielles (4) dans le cadre de base (6) étant approximativement égal au produit de la masse ($m_2$) du vilebrequin ou arbre d' excentrique (1 resp. 1') avec les contrepoids d'équilibrage qui y sont disposés le cas échéant et la distance ($a_2$) entre point d'articulation (7) des bielles (4) dans le cadre de base (6) et l'axe de l'arbre (1 resp. 1') logé dans les bielles (4).

2. Equilibrage des masses pour cadres oscillants selon la revendication 1, caractérisé en ce que la transmission du moteur sur le vilebrequin ou arbre d'excentrique (1, 1') est exécutée par commande à courroie, l'axe de l'arbre du moteur parallèle au vilebrequin ou arbre d'excentrique coupant l'axe (M) de la position moyenne de la bielle (4).

3. Equilibrage des masses pour commandes à mouvement oscillatoire selon la revendication 2, caractérisé en ce que la poulie pour la commande à courroie disposée sur le vilebrequin ou arbre d'excentrique (1, 1') présente un moyeu excentrique (17), l'excentricité de la poulie étant égale à la moitié de l'amplitude d'oscillation du vilebrequin ou arbre d'excentrique multipliée par le sinus de l'angle formé par l'axe (M) de la position moyenne des bielles (4) et la ligne de jonction entre l'axe de l'arbre du moteur et l'axe du vilebrequin ou arbre d'excentrique.

Fig. 1

Fig. 2

Fig. 3

6